# EUROPEAN PATENT SPECIFICATION

(11) **EP 1 807 631 B1**
(45) Date of publication and mention of the grant of the patent: **27.08.2008**
(21) Application number: 04787597.6
(22) Date of filing: 17.09.2004
(51) Int. Cl.: F16C 7/02, F04B 39/00

(54) **A CONNECTING ROD FOR A RECIPROCATING MACHINE, IN PARTICULAR A COMPRESSOR FOR REFRIGERATING EQUIPMENT**
VERBINDUNGSSTANGE FÜR EINE HUBKOLBENMASCHINE, INSBESONDERE EINEN VERDICHTER FÜR KÜHLEINRICHTUNGEN
BIELLE DESTINEE A UNE MACHINE EN VA-ET-VIENT ET NOTAMMENT A UN COMPRESSEUR POUR EQUIPEMENT DE REFRIGERATION

(43) Date of publication of application: 18.07.2007
(73) Proprietor: EMBRACO EUROPE S.r.l., 10121 Torino (IT)
(72) Inventor: BO, Giuseppe, I-10086 Rivarolo Canavese (Torino) (IT); KAKALEJCIK, Jan, 05201 Spisska Nova Ves (SK)
(74) Representative: Gerbino, Angelo
(86) International application number: PCT/IT2004/000505
(87) International publication number: WO 2006/030463

(56) References cited:
- EP-A- 0 787 910
- US-A- 5 524 507
- US-A1- 2002 000 160
- US-A1- 2003 075 007
- PATENT ABSTRACTS OF JAPAN vol. 008, no. 210 (M-328), 26 September 1984 (1984-09-26) -& JP 59 099107 A (MITSUBISHI DENKI KK), 7 June 1984 (1984-06-07)

## Description

The present invention relates to a connecting rod for a reciprocating machine, in particular a compressor for refrigerating equipment.

In more detail, such a connecting rod comprises:
- a first main piece which includes a connecting rod small end, a shaft which extends longitudinally and a half-big end which defines a semi-cylindrical concave surface,
- a second main piece constituted by a cap having a semi-cylindrical concave surface, the semi-cylindrical concave surfaces of the first main piece and the second main piece having respective pairs of mating ends, and
- securing means for securing at least one of the pairs of mating ends in such a manner as to form the connecting rod big end defining on its inside a cylindrical eye, in a diametral plane of which the pairs of mating ends are located.

A known connecting rod of that type is described in the document EP-A-0 787 910, in which various embodiments of the above-mentioned mating ends, for example with a dovetail joint, are illustrated.

However, that type of joint causes deformation of the contacting portions which may bring about a deviation from the complete circularity of the profile of the eye of the connecting rod big end, which deviation, even if slight, may compromise the functionality of the reciprocating machine.

In addition, the joints according to the prior art Lead to the production of frigid structures which are not capable of adaptation to the shape of other pieces on which the connecting rod is typically assembled, in particular the crank pin.

In order to remedy those disadvantages, the present invention relates to a connecting rod which has the features indicated at the beginning of the present description and which is characterized in that, in each of the pairs of mating ends, a first end has an appendage which protrudes outwardly from the connecting rod big end and defines on its inside a cavity in which a projection protruding from a second end is accommodated, the coupling between the appendage and the projection being produced with interference in the direction identified by the shaft and with clearance in the direction perpendicular to that identified by the shaft and lying in the general plane of the eye.

According to the invention, the coupled portions of the mating ends are located externally with respect to the eye of the connecting rod big end, so that any deformation caused by the coupling does not compromise the circularity thereof.

In addition, the fact that the coupling between the mating ends is produced with interference in the direction identified by the shaft enables the two main pieces to remain joinend even in the absence of the securing means. At the same time, the fact that the coupling between the mating ends is produced with clearance in the direction perpendicular to that identified by the shaft permits automatic alignment of the eye of the connecting rod big end with the crank pin.

Further advantages and features of the present invention will become clear from the following detailed description which is given by way of non-limiting example with reference to the appended drawings; in which:

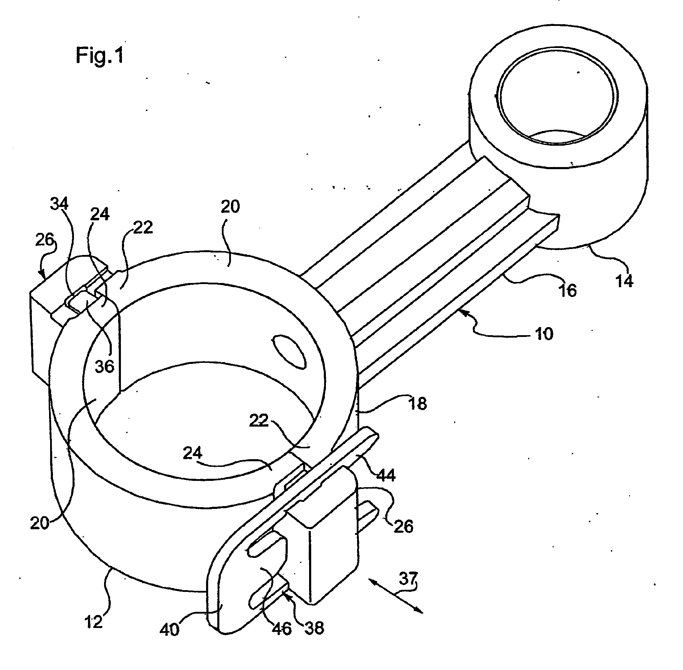

Figure 1 is a perspective view of a connecting rod according to the invention,

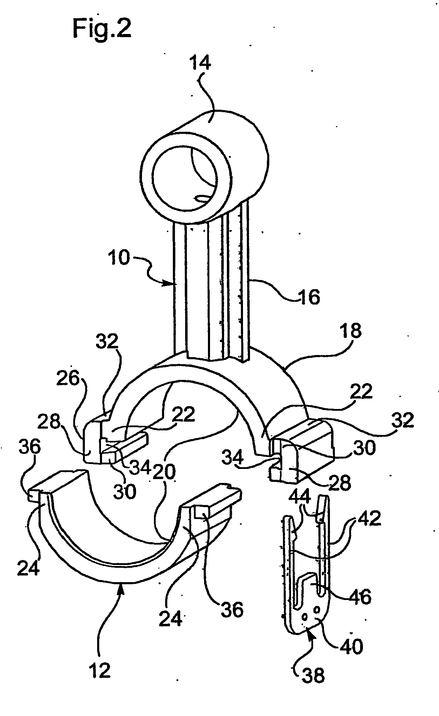

Figure 2 is an exploded perspective view of the connecting rod of the previous Figure,

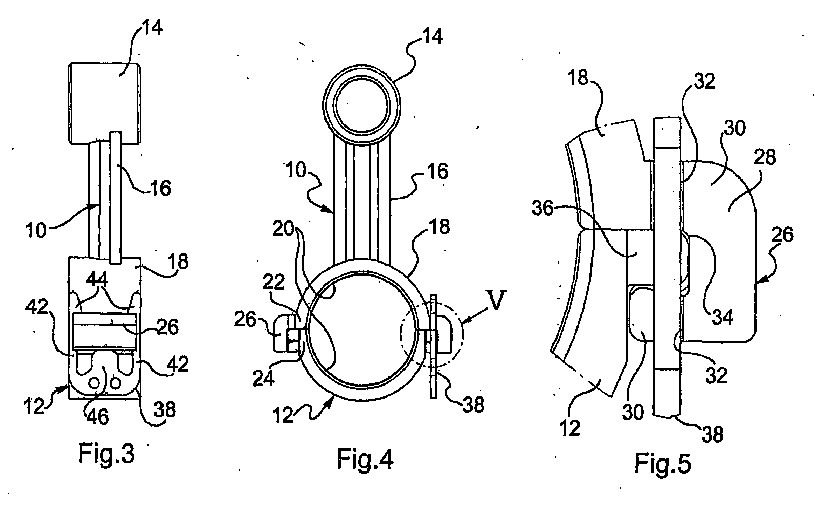

Figure 3 is a side view of the connecting rod of the previous Figures,
Figure 4 is a front view of the connecting rod of the previous Figures, and
Figure 5 is a view of a detail of the connecting rod of Figure 4 on an enlarged scale.

A connecting rod for a reciprocating machine, in particular a compressor for refrigerating equipment, comprises a first main piece 10 and a second main piece 12, which are advantageously producible in sintered metal or reinforced plastics material, for example polyphenylene sulphide (PPS) incorporating glass fibres.

The first main piece 10 includes a connecting rod small end 14, a shaft 16 which extends longitudinally and a half-big end 18 which defines a semi-cylindrical concave surface 20, while the second main piece 12 is constituted by a cap having a semi-cylindrical concave surface 20. Advantageously, the ratio of the height to the width of the shaft 16 is from 1:1.6 to 1:2, so that the shaft has some flexibility, which makes it possible to make up for any errors in perpendicularity between the cylinder and the driving shaft.

The semi-cylindrical concave surfaces 20 of the first main piece 10 and the second main piece 12 have respective pairs constituted by first and second mating ends 22, 24 so as to form the connecting rod big end which defines on its inside a cylindrical eye, in a diametral plane of which the pairs of mating ends 22, 24 are located.

Each first end 22 has an appendage 26 which is shaped in the form of a C in the general plane of the eye and which has a central portion 28, from whose ends extend respective transverse branches 30 on whose .lateral surfaces respective grooves 32 are formed. Each appendage 26 protrudes outwardly from the connecting rod big end and defines on its inside a cavity 34 in which a projection 36 which protrudes from the second end 24 is accommodated. The coupling between each pair formed by an appendage 26 and a projection 36 is produced with interference in the direction identified by the shaft 16 and with slight.clearance (for example of the order of a few hundredths of a mm) in the direction perpendicular to that identified by the shaft 16 and lying in the general plane of the eye (see arrow 37).

This interference enables the two main pieces 10, 12 to be kept assembled under static conditions but is not capable of ensuring the strength of the connection during the operation of the reciprocating machine of which the connecting rod forms part. This result is achieved owing to the presence of means for securing at least one of the pairs of mating ends 22, 24. The securing means are produced in the form of a U-shaped clip 38 having a base portion 40 from whose ends extend respective wings 42 which can be opened out resiliently and which are recessed along the external surface and have at the distal end a respective inwardly projecting tooth 44. A projection acting as a spacer 46 also protrude inwardly from the base portion 40 of the clip 38.

The installation of she clip 38 is effected by flitting the wings 42 in the grooves 32 formed on the lateral surfaces of the transverse branches 30 of the respective appendage 26 and by opening them out resiliently in such a manner that the end teeth 44 of the wings 42 engage beyond the end surface of the transverse branch 30 opposite the branch facing the base portion 40 of the clip 38.

In the connecting rod just described, the coupled appendage 26 and projection 36 of each pair of ends 22, 24 are located radially on the outside with respect to the eye of the connecting rod big end, the circularity of which is thus not compromised by the deformation occurring as a result of the coupling.

In addition, the clearance permitted by that coupling in the direction 37 perpendicular to that identified by the shaft 16 permits automatic alignment of the eye of the connecting rod big end with the crank pin, preventing jamming and similar difficulties.

Naturally, the principle of the invention remaining the same, the details of construction and forms of embodiment may be varied widely with respect to those described purely by way of example, without hereby departing from the scope thereof. In particular, the appendages 26 with the respective cavities 34 could be carried by the second main piece 12 and, correspondingly, the projections 36 accommodated in those cavities 34 could be carried by the first main piece 10.

## Claims

1. A connecting rod for a reciprocating machine, in particular a compressor for refrigerating equipment, comprising:
- a first main piece (10) which includes a connecting rod small end (14), a shaft (16) which extends longitudinally and a half-big end (18) which defines a semi-cylindrical concave surface (20),
- a second main piece (12) constituted by a cap having a semi-cylindrical concave surface (20), the semi-cylindrical concave surfaces (20) of the first main piece (10) and the second main piece (12) having respective pairs of mating ends (22, 24), and
- securing means for securing at least one of the pairs of mating ends (22, 24) in such a manner as to form the connecting rod big end defining on its inside a cylindrical eye, in a diametral plane of which the pairs of mating ends (22, 24) are located,
the connecting rod being **characterized in that**, in each of the pairs of mating ends (22, 24), a first end (22) has an appendage (26) which protrudes outwardly from the connecting rod big end and defines on its inside a cavity (34) in which a projection (36) protruding from a second end (24) is accommodated, the coupling between the appendage (26) and the projection (36) being produced with interference in the direction identified by the shaft (16) and with clearance in the direction perpendicular to that identified by the shaft (16) and lying in the general plane of the cylindrical eye.

2. A connecting rod according to claim 1, **characterized in that**.the appendage (26) of each first end (22) is shaped in the form of a C in the general plane of the eye and has a central portion (28) from whose ends extend respective transverse branches (30), between which is defined the cavity (34) in which the projection (36) protruding from the second end (24) is accommodated.

3. A connecting rod according to either of the preceding claims, **characterized in that** the first ends (22) having an appendage (26) are formed on the first main piece (10), while the second ends (24) are formed on the second main piece (12).

4. A connecting rod according to any one of the preceding claims, **characterized in that** the securing means are produced in the form of a U-shaped clip (38) having a base portion (40) from whose ends extend respectives wings (42) which can be opened out resiliently and which have, at the distal end, a respective inwardly projecting tooth (44).

5. A connecting rod according to claim 4, **characterized in that** a projection acting as a spacer (46) protrudes inwardly from the base portion (40) of the clip (38).

6. A connecting rod according to any one of the preceding claims 2 or 3 and 4 or 5, **characterized in that** respective grooves (32) are formed on the lateral surfaces of the transverse branches (30) of each appendage (26) and accommodate the wings (42) of a clip (38), the end teeth (44) of which wings (42) engage with the external surface of a transverse branch (30).

7. A connecting rod according to any one of the preceding claims, **characterized in that** the ratio of the height to the width of the shaft (16) is from 1:1.6 to 1:2.

## Patentansprüche

1. Verbindungsstange für eine Hubkolbenmaschine, insbesondere einen Verdichter für Kühleinrichtungen, mit:
einem ersten Hauptstück (10), das ein kleines Ende (14) der Verbindungsstange, einen sich in Längsrichtung erstreckenden Schaft (16) und ein halbes großes Ende (18) aufweist, welches eine halbzylindrische konkave Fläche (20) definiert,
einem zweiten Hauptstück (12), das durch einen Aufsatz mit einer halbzylindrischen konkaven Fläche (20) gebildet ist, wobei die halbzylindrischen konkaven Flächen (20) des ersten Hauptstücks (10) und des zweiten Hauptstücks (12) jeweilige Paare von zusammenpassenden Enden (22, 24) aufweisen, und
Sicherungseinrichtungen zum Sichern wenigstens eines von den Paaren von zusammenpassenden Enden (22, 24) auf eine derartige Weise, um das große Ende der Verbindungsstange zu formen, das an seiner Innenseite eine zylindrische Öffnung definiert, auf dessen Durchmesserebene sich die Paare von zusammenpassenden Enden (22, 24) befinden,
wobei die Verbindungsstange **dadurch gekennzeichnet ist, dass** bei jedem von den Paaren von zusammenpassenden Enden (22, 24) ein erstes Ende (22) einen Fortsatz (26) aufweist, der von dem großen Ende der Verbindungsstange nach außen vorsteht und an dessen Innenseite eine Aussparung (34) definiert, in der ein von einem zweiten Ende (24) vorstehender Vorsprung (36) aufgenommen ist,
wobei der Fortsatz (26) und der Vorsprung (36) mit einem Eingriff in der durch den Schaft (16) bestimmten Richtung und mit einem Abstand in der Richtung, die senkrecht zu der durch den Schaft (16) bestimmten Richtung ist, aneinander gekoppelt sind, und wobei die Koppelung in der Hauptebene der zylindrischen Öffnung liegt.

2. Verbindungsstange nach Anspruch 1, **dadurch gekennzeichnet, dass** der Fortsatz (26) eines jeden ersten Endes (22) in der Form eines C's in der Hauptebene der Öffnung geformt ist und einen mittleren Abschnitt (28) aufweist, von dessen Enden sich jeweilige Querschenkel (30) erstrecken, zwischen denen die Aussparung (34) definiert ist, in der der Vorsprung (36) aufgenommen ist, der von dem zweiten Ende (24) vorsteht.

3. Verbindungsstange nach einem der vorangehenden Ansprüche, **dadurch gekennzeichnet, dass** die einen Fortsatz (26) aufweisenden ersten Enden (22) an dem ersten Hauptstück (10) ausgebildet sind, während die zweiten Enden (24) an dem zweiten Hauptstück (12) ausgebildet sind.

4. Verbindungsstange nach einem der vorangehenden Ansprüche, **dadurch gekennzeichnet, dass** die Sicherungseinrichtungen in der Form einer U-förmigen Klammer (38) gefertigt sind, die einen Basisabschnitt (40) aufweist, von dessen Enden sich jeweilige Flügel (42) erstrecken, die sich elastisch aufweiten können, und die an dem distalen Ende jeweils eine einwärts vorstehende Zacke (44) aufweisen.

5. Verbindungsstange nach Anspruch 4, **gekennzeichnet dadurch, dass** ein Vorsprung, der als ein Abstandshalter (46) wirkt, von dem Basisabschnitt (40) der Klammer (38) einwärts vorsteht.

6. Verbindungsstange nach einem der vorangehenden Ansprüche 2 oder 3 und 4 oder 5, **dadurch gekennzeichnet, dass** jeweilige Nuten (32) an den Seitenflächen der Querschenkel (30) eines jeden Fortsatzes (26) ausgebildet sind und die Flügel (42) einer Klammer (38) aufnehmen, wobei die Endzacken (44) dieser Flügel (42) mit der Außenfläche eines Querschenkels (30) in Eingriff gehen.

7. Verbindungsstange nach einem der vorangehenden Ansprüche, **dadurch gekennzeichnet, dass** das Verhältnis der Höhe zu der Breite des Schafts (16) von 1 : 1,6 bis 1 : 2 geht.

## Revendications

1. Bielle pour une machine alternative, notamment un compresseur pour un appareil de réfrigération, comprenant :
- une première pièce principale (10) qui comprend une petite extrémité de bielle (14), un arbre (16) qui s'étend longitudinalement, et une demi grande extrémité (18) qui définit une surface concave semi-cylindrique (20) ;
- une seconde pièce principale (12) se composant d'une couronne possédant une surface concave semi-cylindrique (20), les surfaces concaves semi-cylindriques (20) de la première pièce principale (10) et de la seconde pièce principale (12) ayant des paires respectives d'extrémités conjuguées (22, 24) ; et
- des moyens de fixation pour fixer l'une au moins des paires d'extrémités conjuguées (22, 24) de manière à former la grande extrémité de la bielle qui définit, en son intérieur un oeil cylindrique, dans le plan diamétral duquel se situent les paires d'extrémités correspondantes (22, 24) ;
laquelle bielle est **caractérisée en ce que**, dans chacune des paires d'extrémités conjuguées (22, 24), une première extrémité (22) possède un appendice (26) qui dépasse vers l'extérieur depuis la grande extrémité de la bielle et définit en son intérieur une cavité (34) dans laquelle une protubérance (36) dépassant d'une seconde extrémité (24) vient se loger, le couplage entre l'appendice (26) et la protubérance (36) se faisant par interférence dans la direction définie par l'arbre (16) avec un jeu dans une direction perpendiculaire à celle définie par l'arbre (16) et essentiellement dans le plan général de l'oeil cylindrique.

2. Bielle selon la revendication 1, **caractérisée en ce que** l'appendice (26) de chaque première extrémité (22) est essentiellement en forme de C dans le plan général de l'oeil, et possède une partie centrale (28) des extrémités de laquelle s'étendent des branches transversales respectives (30) entre lesquelles est définie la cavité (34) dans laquelle vient se loger la protubérance (36) dépassant de la seconde extrémité (24).

3. Bielle selon l'une quelconque des revendications précédentes, **caractérisée en ce que** les premières extrémités (22) comportant un appendice (26) sont formées sur la première pièce principale (10), tandis que les secondes extrémités (24) sont formées sur la seconde pièce principale (12).

4. Bielle selon l'une quelconque des revendications précédentes, **caractérisée en ce que** les moyens de fixation se présentent sous forme d'un clip en forme de U (38) comportant une partie de base (40) des extrémités de laquelle s'étendent des ailettes respectives (42) qui peuvent être ouvertes de manière résiliente et qui possèdent, à l'extrémité distale, une dent respective dépassant vers l'intérieur (44).

5. Bielle selon la revendication 4, **caractérisée en ce qu'**une protubérance agissant comme un espaceur (46) dépasse vers l'intérieur depuis la partie de base (40) du clip (38).

6. Bielle selon l'une quelconque des revendications 2 ou 3 et 4 ou 5, **caractérisée en ce que** des gorges respectives (32) sont formées sur les surfaces latérales des branches transversales (30) de chaque appendice (26) et reçoivent les ailettes (42) d'un clip (38), les dents d'extrémité (44) des ailettes (42) entrant en contact avec la surface externe d'une branche transversale (30).

7. Bielle selon l'une quelconque des revendications précédentes, **caractérisée en ce que** le rapport entre la hauteur et la largeur de l'arbre (16) varie de 1 : 1,6 à 1 : 2.
